# FASCICULE DE BREVET EUROPEEN

(11) **EP 0 867 752 B1**
(45) Date de publication et mention de la délivrance du brevet: **11.12.2013**
(21) Numéro de dépôt: 97400702.3
(22) Date de dépôt: 27.03.1997
(51) Int. Cl.: G02F 1/15, G02F 1/153, H01M 10/36, G01N 27/26

(54) **Dispositif électrochimique**
Elektrochrome Vorrichtung
Electrochromic device

(30) Priorité: 27.03.1996 FR 9603799
(43) Date de publication de la demande: 30.09.1998
(73) Titulaire: Sage Electrochromics, Inc., Faribault, MN 55021 (US)
(72) Inventeur: Giron, Jean-Christophe, 75012 Paris (FR)
(74) Mandataire: Renous Chan, Véronique

(56) Documents cités:
- EP-A- 0 058 995
- EP-A- 0 628 849
- EP-A1- 0 058 813
- GB-A- 2 007 864
- US-A- 4 170 406
- US-A- 4 832 463
- PATENT ABSTRACTS OF JAPAN vol. 006, no. 225 (P-154), 10 novembre 1982 -& JP 57 125924 A (NIPPON DENKI KK), 5 août 1982, -& DATABASE WPI Week 8237 Derwent Publications Ltd., London, GB; AN 82-77441E XP002055652
- PATENT ABSTRACTS OF JAPAN vol. 008, no. 165 (P-291), 31 juillet 1984 -& JP 59 061820 A (CANON KK), 9 avril 1984,
- G.BENI, L.M.SCHIAVONE: "Matrix-addressable electrochromic display cell", APPLIED PHYSICS LETTERS, vol. 38, no. 8, 15 April 1981 (1981-04-15) , pages 593-595,

## Description

La présente invention concerne le domaine des dispositifs électrochimiques comportant au moins une couche électrochimiquement active susceptible d'insérer réversiblement et simultanément des ions et des électrons, en particulier des dispositifs électrochromes. Ces dispositifs électrochimiques sont notamment utilisés pour fabriquer des vitrages dont la transmission lumineuse et/ou énergétique ou la réflexion lumineuse peuvent être modulées au moyen d'un courant électrique. Ceux-ci peuvent aussi être utilisés pour fabriquer des éléments de stockage d'énergie tels que des batteries ou encore des capteurs de gaz, ou des éléments d'affichage.

Si l'on prend l'exemple particulier des systèmes électrochromes, on rappelle que ces derniers, de manière connue, comportent une couche d'un matériau capable d'insérer de façon réversible et simultanée des cations et des électrons et dont les états d'oxydation correspondant aux états inséré et désinséré sont de coloration distincte, un des états étant généralement transparent. La réaction d'insertion ou de désinsertion est commandée par une alimentation électrique adéquate, notamment par application d'une différence de potentiel adaptée. Le matériau électrochrome, en général à base d'oxyde de tungstène, doit ainsi être mis en contact avec une source d'électrons telle qu'une couche électroconductrice transparente et une source de cations telle qu'un électrolyte conducteur ionique.

Par ailleurs, il est connu que pour assurer au moins une centaine de commutations, il doit être associé à la couche de matériau électrochrome une contre-électrode capable elle aussi d'insérer de façon réversible des cations, symétriquement par rapport à la couche de matériau électrochrome de sorte que, macroscopiquement, l'électrolyte apparaît comme un simple médium des cations.

La contre-électrode doit être constituée ou d'une couche neutre en coloration ou du moins transparente quand la couche électrochrome est à l'état décoloré. L'oxyde de tungstène étant un matériau électrochrome cathodique, c'est-à-dire que son état coloré correspond à l'état le plus réduit, un matériau électrochrome anodique tel que l'oxyde de nickel ou l'oxyde d'iridium est généralement utilisé pour la contre-électrode. Il a également été proposé d'utiliser un matériau optiquement neutre dans les états d'oxydation concernés, comme par exemple l'oxyde de cérium ou des matériaux organiques comme les polymères conducteurs électroniques (polyaniline...) ou le bleu de Prusse.

On trouvera la description de tels systèmes par exemple dans les brevets européens EP-0 338 876, EP-0 408 427, EP-0 575 207 et EP-0 628 849.

Actuellement, on peut ranger ces systèmes dans deux catégories, selon le type d'électrolyte qu'ils utilisent :
- soit l'électrolyte se présente sous la forme d'un polymère ou d'un gel, par exemple un polymère à conduction protonique tel que ceux décrits dans le brevets européens EP-0 253 713 et EP-0 670 346, ou un polymère à conduction d'ions lithium tels que ceux décrits dans les brevets EP-0 382 623, EP-0 518 754 ou EP-0 532 408 ;
- soit l'électrolyte est une couche minérale, conducteur ionique mais isolant électroniquement, on parle alors de systèmes électrochromes « tout solide ».

Tous ces dispositifs électrochimiques autorisent une réversibilité satisfaisante des phénomènes d'insertion/désinsertion d'ions, donc des phénomènes de coloration/décoloration dans le cas spécifique des systèmes électrochromes. Toutefois, il est apparu que ce caractère de réversibilité avait tendance à se dégrader au cours du temps, notamment du fait d'une exposition prolongée à des rayons ultraviolets, ou à la chaleur (par exemple quand la température atteint 80°C) ou du fait d'un nombre élevé de commutations d'un état de coloration à un autre.

Ce problème a déjà été étudié dans le brevet EP-0 628 849 précité. Celui-ci propose une première solution consistant à interposer entre l'électrolyte et la contre-électrode une couche dite « couche-barrière », perméable aux ions que l'on cherche à insérer/désinsérer réversiblement, et qui va limiter la dégradation du système en retardant la réduction irréversible de la contre-électrode, voire sa dissolution, au contact de l'électrolyte.

Cependant, cette solution présente des limites. En effet, compte-tenu de la nature, résultant principalement du mode de fabrication, des couches électroconductrices qui soutendent le dépôt des couches électrochimiquement actives, et principalement leur rugosité importante, on constate que cette couche-barrière doit être relativement épaisse pour jouer efficacement le rôle de protection de la contre-électrode qui lui est dévolu. Or, l'inconvénient d'une couche-barrière épaisse réside dans une perte partielle, ou même totale, de la fonctionnalité de l'ensemble du système, ou d'une partie du système, c'est-à-dire qu'elle ralentit ou même supprime les réactions réversibles d'insertion/désinsertion ionique au niveau d'une des couches ou des deux couches électrochimiquement actives.

Le but de l'invention est alors de trouver un moyen pour augmenter la durabilité des systèmes électrochimiques à couches aptes à insérer réversiblement des ions, tout particulièrement des systèmes électrochromes, sans rencontrer l'inconvénient mentionné plus haut. Subsidiairement, l'invention se donne également pour objectif de simplifier la fabrication de tels systèmes.

L'invention a pour objet un dispositif électrochimique comportant au moins un substrat, au moins une couche électroconductrice, au moins une couche électrochimiquement active susceptible d'insérer de manière réversible des ions, notamment des cations tels que H⁺, Li⁺, Na⁺, Ag⁺, K⁺ ou des anions du type OH⁻, et un électrolyte. Selon l'invention, cet électrolyte est une couche ou un empilement multicouche comprenant au moins une couche en un matériau conducteur ionique susceptible d'insérer de manière réversible les ions mais dont le degré d'oxydation global est maintenu essentiellement constant, couche que l'on désignera pour plus de clarté dans le reste de la description sous le terme de « couche A ».

Dans le contexte de l'invention, on comprend, pour cette couche A, sous le terme de « matériau susceptible d'insérer de manière réversible des ions » tout matériau ou association de matériaux à insertion électrochimique, ainsi que tout matériau ou association de matériaux dits « supercapacitifs » où les espèces chimiques restent en surface dudit matériau ou desdits matériaux, par effet électrostatique.

Toujours dans le contexte de l'invention, on comprend par « degré d'oxydation global » le degré d'oxydation du matériau ou de l'ensemble des matériaux constitutifs de la couche A, degré d'oxydation intégrant à la fois les effets de surface et les effets de volume.

De manière surprenante, les inventeurs ont ainsi eu recours à un matériau d'insertion ionique non seulement pour constituer la ou les couches électrochimiquement actives, ce qui était connu, mais aussi pour constituer tout ou partie de l'électrolyte du système. Utiliser un tel matériau en tant qu'électrolyte revient en quelque sorte à le détourner de sa fonction première habituelle : en le figeant dans un état d'insertion donné, en « inhibant » sa capacité à insérer réversiblement et simultanément des ions et des électrons, on n'exploite plus alors que ses propriétés de conduction/perméabilité ionique, et il s'est avéré qu'il jouait de façon très satisfaisante ce rôle d'électrolyte. En outre, comme cela sera détaillé ultérieurement à l'aide des exemples, le choix d'un tel matériau en tant qu'électrolyte ouvre de larges possibilités de mise en oeuvre, qui vont permettre d'augmenter significativement la durabilité/la durée de vie des dispositifs électrochimiques. Elles vont autoriser des configurations où les couches électrochimiquement actives, notamment celles qui jouent le rôle de contre-électrode, ne sont plus exposées à des dégradations du type réduction chimique irréversible ou pire, dissolution.

Cependant, pour parvenir à empêcher que le matériau de cette couche A n'insère de façon réversible des ions, il est nécessaire de maintenir son degré d'oxydation global invariable. Pour ce faire, l'invention propose deux modes de réalisation non limitatifs, qui peuvent être soit alternatifs, soit cumulatifs.

Selon un premier mode de réalisation, on isole électriquement la couche A vis-à-vis d'au moins une des sources d'électrons du dispositif, notamment en interposant au moins une couche d'un matériau isolant électroniquement (on comprend ici par « source d'électrons » soit une couche électrochimiquement active, soit une couche électroconductrice). De préférence, ces couches de matériau isolant électroniquement sont choisies de façon à être également conducteurs ioniques/perméables aux ions. De fait, elles peuvent alors faire partie de l'électrolyte au même titre que la couche A, l'électrolyte se trouvant dans ce cas sous la forme d'un empilement multicouches. Avantageusement, elles se trouvent alors disposées en contact direct avec au moins une des faces de la couche A.

Selon un second mode de réalisation, on maintient le degré d'oxydation global de la couche A constant en adaptant l'alimentation électrique aux bornes des couches électroconductrices du dispositif : il suffit d'ajuster l'alimentation pour conserver le potentiel électrique de la couche A à des valeurs qui soient hors de la plage de potentiels qui provoqueraient une variation du taux d'insertion ionique du matériau qui la constitue. Il reste ensuite à sélectionner de manière adéquate la nature de ce matériau et la nature du matériau de la ou des couche(s) électrochimiquement active(s) pour que cette plage de potentiels soit différente de la plage de potentiels permettant le fonctionnement du système, c'est-à-dire différente de la plage de potentiels permettant l'insertion/la désinsertion réversible des couches électrochimiquement actives.

Un exemple de configuration selon l'un ou l'autre des modes de réalisation décrits précédemment est réalisé par un dispositif électrochimique qui comporte successivement une couche électroconductrice, une couche électrochimiquement active susceptible d'insérer réversiblement des cations, notamment en un matériau électrochrome cathodique, un électrolyte comportant la couche A, éventuellement au moins une couche isolante électroniquement mais qui laisse passer les cations, une seconde couche électrochimiquement active susceptible d'insérer réversiblement des cations, notamment une couche de matériau électrochrome anodique, et enfin une couche électroconductrice.

Avantageusement, le type de matériau choisi pour constituer la couche A est un matériau à propriété électrochrome, ce type de matériau pouvant également être choisi pour constituer les couches électrochimiquement actives du dispositif. Pour la couche A, il est préférable de bloquer le matériau électrochrome qui la constitue à l'état décoloré : de cette façon, sa coloration n'interfère pas avec la coloration variable des matériaux électrochromes des couches électrochimiquement actives. Mais on peut également choisir de le figer dans un état de coloration intermédiaire donné.

Pour que le matériau constitutif de la couche A soit un bon conducteur ionique, on peut avantageusement le choisir, dans le cas où le dispositif fonctionne par insertion réversible d'ions protons H⁺, sous la forme d'un oxyde ou d'un mélange d'oxydes métallique(s) qui peuvent être hydraté(s) ou non hydraté(s). On les choisit de préférence dans le groupe comprenant l'oxyde de tungstène éventuellement hydraté WO₃.nH₂O, l'oxyde de niobium éventuellement hydraté Nb₂O₅.nH₂O, l'oxyde d'étain éventuellement hydraté SnO₂.nH₂O, l'oxyde de bismuth éventuellement hydraté Bi₂O₃.nH₂O, l'oxyde de titane éventuellement hydraté TiO₂-nH₂O, l'oxyde de vanadium éventuellement hydraté V₂O₅-nH₂O, l'oxyde de nickel éventuellement hydraté NiOₓH_{y}.nH₂O, ou l'oxyde de molybdène éventuellement hydraté MoO₃-nH₂O, avec pour tous ces oxydes n ≥ O. Cet oxyde ou ce mélange d'oxydes peut également comporter un métal additionnel différent du métal majoritaire de l'oxyde, tel que le titane, le tantale ou le rhénium, tout particulièrement si l'on cherche à hydrater significativement l'oxyde : ces trois métaux ont tendance à faciliter l'hydratation de l'oxyde ou du mélange d'oxydes en question, hydratation souvent avantageuse pour assurer une conduction protonique satisfaisante. Pour favoriser cette hydratation, peuvent également être ajoutés comme additifs des alcalins du type Na, Li, K.

Si, par contre, le dispositif fonctionne par insertion réversible d'ions lithium Li⁺, le matériau de la couche A doit cette fois laisser passer les ions lithium. On peut alors avantageusement le choisir à base d'un oxyde ou d'un mélange d'oxyde(s) métallique(s) lithiés ou non, notamment choisi(s) dans le groupe comprenant l'oxyde de nickel NiOₓ, l'oxyde de nickel lithié Li_{y}NiOₓ, un mélange d'oxyde de titane et de cérium CeTiOₓ, l'oxyde de tungstène WO₃, l'oxyde de niobium Nb₂O₅, l'oxyde de vanadium V₂O₅, l'oxyde de vanadium lithié LiₓV₂O₅.

En ce qui concerne le choix du matériau isolant électroniquement, il peut avantageusement être à base d'oxyde ou de mélange d'oxydes. On choisit par exemple parmi les oxydes d'un métal de la colonne Vb du tableau périodique, notamment l'oxyde de tantale, mais aussi parmi les oxydes appartenant au groupe comprenant l'oxyde d'antimoine Sb₂O₅, l'oxyde de zirconium ZrO₂, l'oxyde de titane TiO₂, l'oxyde de silicium SiO₂, l'oxyde de chrome CrO₃, l'oxyde de germanium GeO₃. Il peut s'agir par exemple d'un oxyde mixte de tantale et de titane, d'oxyde de zinc sous la forme ZnO-(H₃PO₄)₂.nH₂O ou la forme hydratée de l'un quelconque des matériaux précédentes, ces derniers oxydes hydratés étant particulièrement adaptés pour des dispositifs fonctionnant par insertion réversible de protons.

Ces matériaux peuvent en outre contenir des additifs favorisant leur hydrophilie, et donc augmentant leur taux d'hydratation. Ces additifs, qui ne représentent de préférence que quelques pourcents en poids de la couche, sont notamment des métaux tels que W, Re ou des alcalins du type Li, Na, K.

On peut aussi choisir des couches de matériau isolant électroniquement à base des composés ou de mélanges de composés suivants : CeF₃, hexauranylphosphate HUP, MgF₂, CaF₂, SiOₓ, LiF, Na₃AlF₆, ou à base de Li₃N, LiTaO₃, LiAlF₄, Li₃PO₄, LiPO₂, LiN, LiNbO₃, MgF₂POLi, Li₂WO₄, cette dernière série de matériaux étant plus particulièrement adaptée à un fonctionnement du dispositif par insertion réversible d'ions lithium Li⁺. Que le dispositif fonctionne par insertion d'ions lithium ou de protons, notamment, on peut en fait également choisir les couches isolantes électroniquement telles qu'elles comportent un matériau devenu isolant électroniquement en bloquant sa capacité première à insérer des ions, par contrôle du potentiel de ces couches, il peut ainsi s'agir d'un matériau à base d'oxyde de tungstène.

A noter également que les matériaux précédemment listés pour constituer la couche A, que le système fonctionne par insertion de ions Li⁺ ou H⁺, ainsi que les matériaux précédemment listés pour constituer le matériau isolant électroniquement, peuvent en outre être au moins partiellement nitruré(s) et/ou phosphaté(s). Quand les dépôts de ces couches s'effectuent par pulvérisation cathodique, on peut ainsi prévoir des pulvérisations réactives en présence, respectivement d'un certain taux de N₂ et de PH₃, ou toute molécule contenant respectivement au moins un atome d'azote et de phosphore.

L'électrolyte multicouche de l'invention comprenant au moins la couche A peut également avantageusement comprendre au moins une couche d'un autre matériau conducteur ionique. Il peut s'agir d'une couche de liquide aqueux, tel que de l'eau additionnée d'acide sulfurique ou phosphorique dans le cas d'une insertion réversible de protons, d'une couche de liquide anhydre tel que du carbonate de propylène contenant un sel de lithium dans le cas d'une insertion réversible d'ions lithium. Il peut aussi s'agir d'une couche de gel ou de polymère, notamment des polymères conducteurs protoniques du type solution solide de polyoxyéthylène et d'acide phosphorique POE-H₃PO₄ (dans ce cas, le polymère constitue également un isolant électronique) ou encore à base d'un polymère obtenu par copolymérisation de trois précurseurs comprenant deux types de trialkoxysilanes greffés et un plastifiant présentant au moins un groupement urée. En tant que polymère conducteur d'ions lithium, on peut choisir un ionomère obtenu par neutralisation partielle d'acide polyacrylique, ou un polymère à base de polyéthylène imine branchée et d'un sel de lithium. Pour plus de détails sur la nature et la synthèse de tels produits polymériques, on se reportera avantageusement aux brevets cités en préambule à la présente demande.

Selon l'invention, on peut également avantageusement envisager de superposer un certain nombre de multi-couches électrolytes telles que définies précédemment, notamment d'envisager un dédoublement : on peut ainsi favoriser la diminution des risques d'apparition de court-circuit surfacique dans le système. On peut ainsi avoir dans les systèmes de l'invention un multi-couche électrolyte « tout solide » dédoublé de type (NiOₓH_{y}-nH₂O/WO₃-nH_{2O})ₚ ou (Ta₂O₅-nH₂O/WO₃-nH₂O)ₚ, avec p ≥ 2.

Venons-en maintenant à la nature des couches électrochimiquement actives du dispositif. Comme évoqué précédemment, on les choisit de préférence à propriété électrochrome et au nombre de deux, avec une couche de matériau électrochrome cathodique et une couche de matériau électrochrome anodique faisant fonction de contre-électrode.

Pour constituer la couche de matériau électrochrome cathodique, on peut choisir un matériau ou un mélange de matériaux choisi(s) dans le groupe comprenant l'oxyde de tungstène WO₃, l'oxyde de molybdène MoO₃, l'oxyde de vanadium V₂O₅, l'oxyde de niobium Nb₂O₅, l'oxyde de titane TiO₂, un matériau « cermet » (association de matériau métallique et céramique, notamment sous la forme de particules métalliques dans une matrice céramique tel que WO₃/Au ou WO₃/Ag), un mélange d'oxydes de tungstène et de rhénium WO₃/ReO₃, l'acide phosphotungstique). Ces matériaux conviennent notamment dans le cas d'insertion réversible de protons et d'ions lithium. On peut aussi choisir des matériaux à base de métallophtalocyanine ou métallodibenzophtalocyanine de métaux de transition ou de terres rares.

Dans le cas où le dispositif fonctionne par insertion réversible de protons, on peut utiliser les mêmes matériaux, éventuellement sous forme hydratée.

Pour constituer la couche de matériau électrochrome anodique, on peut choisir un matériau qui répond à la formule MₓA_{y}U_{z}, avec M un métal de transition, A l'ion utilisé pour l'insertion réversible, par exemple un alcalin ou un proton, et U un chalcogène tel que l'oxygène, le soufre ou le sélénium Se.

Il peut s'agir, notamment dans le cas d'une insertion d'ions protons H⁺, d'un composé ou d'un mélange de composés appartenant au groupe comprenant LiNiOₓ, IrOₓH_{y}, IrOₓH_{y}N_{z}, NiOₓ, NiOₓH_{z}, NiOₓH_{y}N_{z}, RhOₓ, CoOₓ, CrOₓ, MnOₓ.

On peut aussi choisir des hydrures de terre rare, de lanthanide ou de métaux de transition MₓH_{y}, particulièrement dans le cas où le métal est l'Yttrium ou le lanthane. Dans le cas d'une insertion réversible d'ions lithium Li⁺, on choisit plutôt un composé ou un mélange de composés appartenant au groupe comprenant LiNiOₓ, LiMn_{z}O₄, IrOₓ, LiₓIrO_{y}, NiOₓ, CeOₓ, TiOₓ, CeOₓ-TiOₓ, RhOₓ, CoOₓ, CrOₓ, MnOₓ, VOₓ, LiₓCoO_{y}, LiCrO_{y}, LiₓVO_{y}, ReOₓ, RhOₓ, PtOₓ, FeOₓ, OsOₓ, CuOₓ, PrOₓ et tous ces matériaux sous forme lithiée. Dans le cas d'une insertion de protons ou d'ions lithium, on peut aussi choisir des matériaux à base d'hexacyanométalates, notamment de forme M[M'(CN)₆], avec M et M' appartenant à la famille des métaux de transition et/ou des terres rares. On utilise plus particulièrement les « couples » M/M' suivants : Fe/Fe (composé également connu sous le nom de bleu de Prusse), Fe/Ru, Cu/Ru, Fe/Cr, Fe/Os, Cu/Os, Cr/Fe, Fe/Rn, ou encore les « couples » Ce/Fe, Pr/Fe, Nd/Fe, Sm/Fe, Eu/Fe, Gd/Fe, Tb/Fe, Dy/Fe, Ho/Fe, Er/Fe, Tm/Fe, Yb/Fe, Lu/Fe.

Qu'il s'agisse du matériau électrochrome cathodique ou du matériau électrochrome anodique, ces matériaux peuvent en outre être nitrurés au moins partiellement. On peut ainsi citer, en tant que matériau électrochrome cathodique WOₓNₓ.

En ce qui concerne la nature des couches électroconductrices du dispositif, il y a deux variantes possibles : on peut avoir recours à des matériaux à base d'oxyde métallique dopé tels que de l'oxyde d'étain dopé au fluor SnO₂:F ou l'oxyde d'indium dopé à l'étain ITO. On peut aussi utiliser des couches en métal ou en alliage métallique, par exemple à partir d'or Au, d'argent Ag ou d'aluminium Al. La couche métallique peut être déposée sur une couche plus fine métallique du type alliage Ni/Cr pour faciliter sa nucléation. Dans le cas le plus fréquent, le dispositif possède deux couches électroconductrices. Elles peuvent être soit toutes les deux métalliques, soit toutes les deux à base d'oxyde dopé, soit l'une à base de métal et d'autre à base d'oxyde dopé. Le choix peut notamment être dicté par l'application du dispositif électrochimique que l'on vise. On peut aussi avoir des superpositions de plusieurs couches électroconductrices. En outre, particulièrement dans le cas des systèmes dits « tout solide », la dernière couche électroconductrice (la plus éloignée du substrat sur lequel se sont effectués les dépôts des couches successives), peut être faite d'un empilement du type Au/WO₃ ou NiCr/Au/WO₃, la dernière couche en oxyde dur de type WO₃ protégeant le reste de l'empilement, au moins de manière provisoire avant montage, pose d'un vernis protecteur, assemblage avec un second substrat, ... .

Ainsi, il peut être nécessaire que ces couches soient transparentes, notamment quand le dispositif est destiné à fonctionner en transmission, on préfère alors utiliser des couches à base d'oxyde ou des couches de métal de faible épaisseur. Mais on peut vouloir aussi faire fonctionner le dispositif en réflexion, et on peut alors judicieusement choisir l'une des couches électroconductrices transparente, notamment à base d'oxyde, et l'autre couche réfléchissante cette fois-ci plutôt en métal et choisie d'une épaisseur suffisante pour opacifier partiellement ou totalement le dispositif.

Avantageusement, selon une variante préférée de l'invention, l'électrolyte multicouche est choisi tel que l'ensemble des couches qui le constituent sont des couches de matériau solide. Avantageusement, l'ensemble des couches du dispositif est en fait à base de matériaux solides. Dans le contexte de l'invention, on entend par « matériau solide » tout matériau ayant la tenue mécanique d'un solide, en particulier tout matériau essentiellement minéral ou organique ou tout matériau hybride, c'est-à-dire partiellement minéral et partiellement organique, comme les matériaux que l'on peut obtenir par dépôt sol-gel à partir de précurseurs organo-minéraux. On a alors une configuration de système dit « tout solide » qui présente un avantage clair en termes de facilité de fabrication. En effet, quand le système contient un électrolyte sous forme de polymère qui n'a pas la tenue mécanique d'un solide, par exemple, cela contraint à fabriquer en fait, en parallèle, deux « demi-cellules » constituée chacune d'un substrat porteur revêtu d'une première couche électroconductrice puis d'une seconde couche électrochimiquement active, ces deux demi-cellules étant ensuite assemblées en insérant entre elles l'électrolyte. Avec une configuration « tout solide », la fabrication est simplifiée, puisque l'on peut déposer l'ensemble des couches du système, l'une après l'autre, sur un unique substrat porteur. On allège en outre le dispositif, puisqu'il n'est plus indispensable d'avoir deux substrats porteurs.

Selon l'invention, on peut déposer tout ou partie des couches du dispositif électrochimique à l'aide de techniques sous vide du type pulvérisation cathodique, éventuellement assistée par champ magnétique et réactive, ou par évaporation éventuellement réactive, ou par des techniques impliquant la décomposition de précurseurs comme les techniques de pyrolyse ou de sol-gel. Si l'on reprend la configuration « tout solide » évoquée ci-dessus, on peut ainsi par exemple déposer sur un substrat toutes les couches par pulvérisation cathodique, le substrat défilant successivement dans des enceintes sous vide contenant l'atmosphère contrôlée et la cible adéquates.

L'invention concerne également toutes les applications du dispositif électrochimique qui a été décrit et qui sont notamment au nombre de quatre :
→ la première application concerne les vitrages électrochromes. Dans ce cas, avantageusement, on prévoit que le ou les substrat(s) du dispositif est (sont) transparent(s), en verre ou en plastique, quand les vitrages sont destinés à fonctionner en transmission lumineuse variable. Si on souhaite conférer au vitrage une fonction miroir, et le faire fonctionner en réflexion lumineuse variable, plusieurs solutions sont possibles : soit on choisit un des substrats opaque et réfléchissant (par exemple une plaque métallique), soit on associe le dispositif à un élément opaque et réfléchissant, soit on choisit une des couches électroconductrices du dispositif de nature métallique et suffisamment épaisse pour être réfléchissante.
   Notamment quand le vitrage est destiné à fonctionner en transmission lumineuse variable, avec un dispositif muni d'un ou deux substrats transparents, on peut le monter en vitrage multiple, notamment en double-vitrage avec un autre substrat transparent, et/ou en vitrage feuilleté ;
→ la seconde application concerne les éléments de stockage d'énergie, tout particulièrement les batteries, que l'on peut utiliser par exemple dans tous les appareils faisant intervenir des moyens électroniques et/ou informatiques, et tous les appareils nécessitant un dispositif de stockage d'énergie qui leur soit propre, autonome ou non ;
→ la troisième application concerne les capteurs de gaz,
→ la quatrième application concerne les systèmes d'affichage, où l'on juxtapose alors plusieurs systèmes électrochromes selon l'invention, par exemple sous forme de « damiers » de vitrages électrochromes commandés électriquement indépendamment les uns des autres. On peut ainsi former des écrans, panneaux d'informations ou publicitaires.

Si l'on revient à la première application, celle des vitrages électrochromes, ces derniers peuvent avantageusement être employés en tant que vitrages pour le bâtiment, par exemple vitrages feuilletés, multiples du type double-vitrage ou vitrage pariétodynamique, pour l'automobile, vitrages de véhicule industriel/de transport collectif, vitrages d'avion, vitrages ferroviaires, rétroviseurs, miroirs ou en tant qu'éléments d'optique tels que les objectifs d'appareil photographique, ou encore en tant que face avant ou élément à disposer sur ou à proximité de la face avant d'écrans de visualisation d'appareils tels que les ordinateurs ou les télévisions.

Des modes de réalisation préférés de l'invention peuvent être de type :
□ verre / couche(s) électroconductrice(s) / NiOₓH_{y} ou IrOₓH_{y} / [Ta₂O₅-nH₂O/WO₃-nH₂O/POE-H₃PO₄] / WO₃ / verre,
   électrolyte multi-couches
   les substrats en verre pouvant être remplacés par d'autres types de substrats, notamment à base de matériaux plastiques :
□ substrat couche électroconductrice /WO₃/ [Ta₂O₅-nH₂O ou Sb₂O₅-nH₂O/WO₃-nH₂O/Sb₂O₅-nH₂O ou Ta₂O₅-nH₂O] couche(s) électroconductrice(s) / NiOₓH_{y} ou HₓIrO_{y} ou Nil_{z}OₓH_{y} ou IrSn_{z}OₓH_{y}, un empilement équivalent au précédent, mais en substituant au multi-couche électrolyte à trois couches un multi-couche électrolyte de séquence :
□ (NiOₓH_{y}-nH₂O / WO₃-nH₂O)ₙ, avec n ≥ 1, on illustre ainsi un type de multi-couche électrolyte à séquences répétées, notamment dédoublé.

Les dispositifs de l'invention utilisés en tant que batterie peuvent aussi être employés dans le domaine du bâtiment ou des véhicules, ou faire partie d'appareils du type ordinateurs ou télévisions.

En fait, les applications en tant que batteries des systèmes électrochimiques selon l'invention peuvent être très variées et particulièrement avantageuses, car, notamment dans le cas où l'on a recours à des systèmes « tout solide » peu encombrants, on peut aussi former des batteries solides, plates, non polluantes, (sans plomb, ni cadmium, ni liquide acide) et rechargeables. Si l'on a besoin de batteries particulièrement minces, on peut utiliser les systèmes de l'invention en « tout solide » et dont le ou les substrat(s) protecteur(s) des couches fonctionnelles peuvent être des substrats en matériau plastique souple et mince comme le polyéthylènetéréphtalate PET. On peut adapter ainsi des structures de système schématiquement de type :
□ substrat plastique (PET) /couche métallique / couche électrochimiquement active / électrolyte multi-couches / couche électrochimiquement active / couche métallique / matériau protecteur.

Avec une telle structure, de telles batteries peuvent trouver application dans des véhicules, par exemple sous forme d'enroulement ou de couches superposées. On peut aussi les utiliser dans des cartes à puce électronique : elles permettent alors de conférer une fonction active à l'élément électronique de la carte (on peut les encapsuler dans l'épaisseur de la carte).

On peut aussi, de manière non exhaustive, citer d'autres applications à ces nouvelles batteries : les étiquettes auto-alimentées, les emballages « intelligents », les montres minces, tout appareil électronique auto-alimenté, des implants biologiques, des batteries en association avec des cellules solaires de type photovoltaïque pour stocker l'énergie, et tous les appareils électroménagers et domestiques.

On peut noter, toujours dans l'application batterie, que si l'on veut augmenter la valeur de la tension électrique délivrée par la batterie, on peut faire un montage consistant à en mettre au moins deux en série, la dernière couche électroconductrice du premier système étant confondue avec la première couche électroconductrice, en une couche qui est à la fois conductrice électroniquement et barrière ionique, notamment une couche (ou multi-couche) métallique du type Ag, Au et/ou alliage NiCr. Bien sûr, basé sur le même principe, on peut prévoir des montages en série de n systèmes avec n > 2.

On peut ainsi avoir un empilement de type :
□ substrat /SnO₂ :F / [WO₃/Ta₂O₅-nH₂O ou Sb₂O₅-nH₂O/WO₃-nH₂O/IrOₓ/NiCr]ₙ / substrat.

(Ici et dans tout l'ensemble du présent texte, il faut comprendre que les couches électroconductrices du type SnO₂:F peuvent être substituées par des couches d'autres oxydes métalliques dopés du type ITO ou par des couches métalliques de type Ag, Au, NiCr).

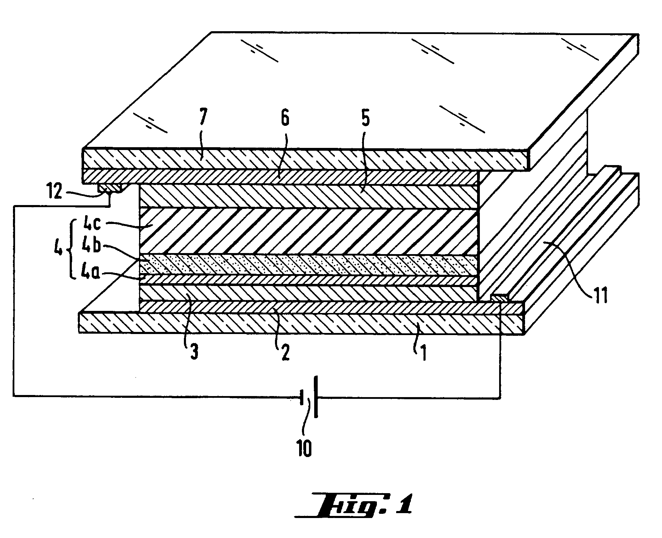

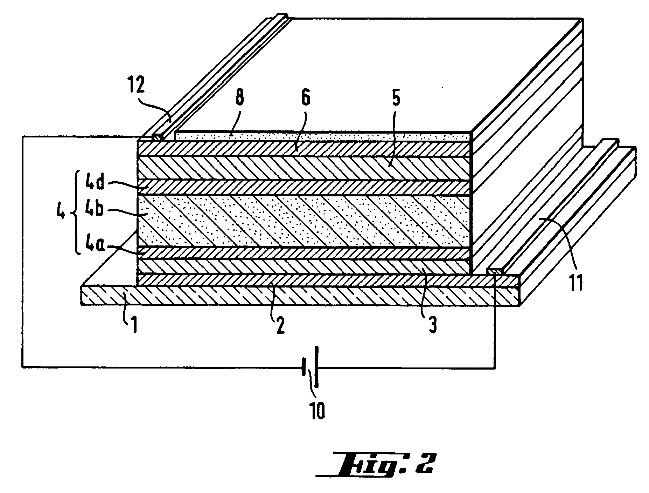

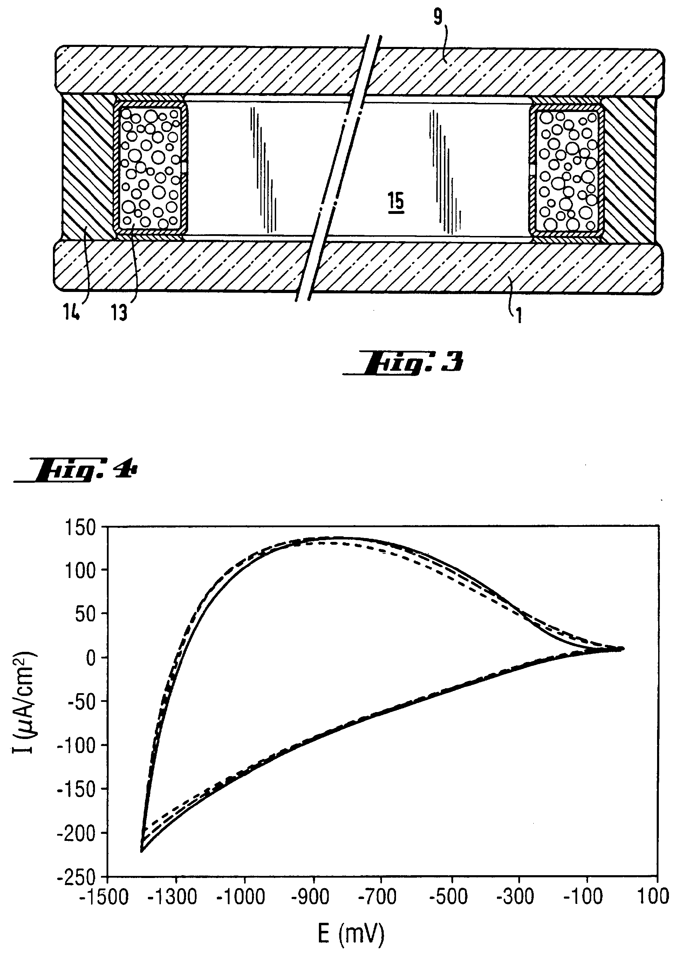

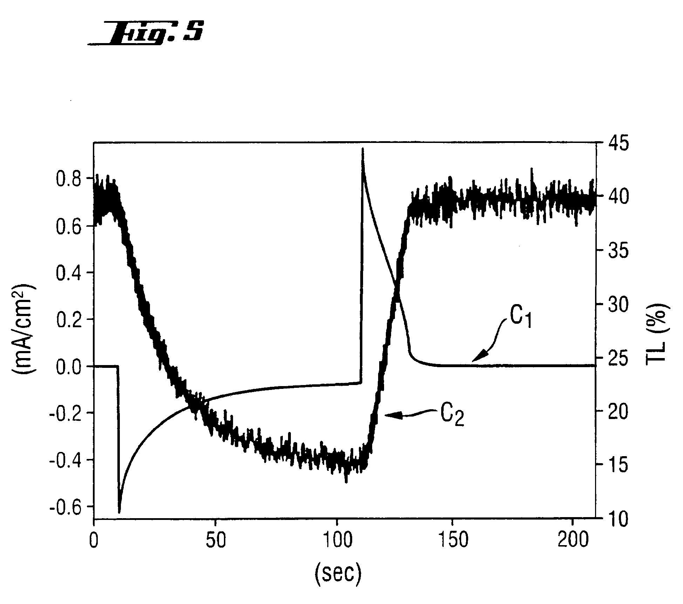

D'autres détails et caractéristiques avantageux de l'invention ressortent de la description faite ci-après en référence aux dessins annexés qui représentent :
□ **figure 1** : une représentation d'un premier mode de réalisation d'un vitrage électrochrome selon l'invention,
□ **figure 2** **:** une représentation d'un second mode de réalisation d'un vitrage électrochrome selon l'invention,
□ **figure 3** **:** une représentation d'un montage en double-vitrage du vitrage selon la figure 2,
□ **figure 4** **:** un voltamogramme d'une demi-cellule d'un vitrage selon la figure 1,
□ **figure 5** **:** une courbe de densité de courant lors d'une commutation d'un vitrage selon la figure 2.

Toutes ces figures sont extrêmement schématiques et ne respectent pas les proportions entre les différents éléments représentés, ceci afin d'en faciliter la lecture.

Les exemples non limitatifs concernent tous des vitrages électrochromes à insertion réversible de protons H⁺ et utilisant des substrats de verre silico-sodo-calcique clair de 4 mm d'épaisseur. Toutes les couches revêtant ces substrats qui sont à base de métal sont obtenues par pulvérisation cathodique assistée par champ magnétique en atmosphère inerte (Ar) à partir d'une cible du métal correspondant. Toutes les couches qui sont à base d'oxyde sont également obtenues par cette technique à partir d'une cible de métal, mais en atmosphère réactive contenant de l'oxygène, et éventuellement également de l'hydrogène et/ou de vapeur d'eau en cas d'oxyde obtenu sous forme hydratée. Toutes les couches à base d'oxyde fluoré tel que SnO₂:F sont déposées soit par pulvérisation cathodique en atmosphère réactive contenant à la fois de l'oxygène et un gaz fluoré, soit par pyrolyse en phase solide ou gazeuse à partir de précurseurs du type organo-métalliques, de manière connue. Les couches de polymère sont obtenues par coulée. Il va de soi que l'invention n'est pas limitée à ces types de techniques de dépôt, et que toute autre technique peut être utilisée avec profit. Ainsi, les couches à base d'oxyde peuvent également être déposées par pyrolyse ou par sol-gel.

Dans ces exemples, on ne rentrera pas dans le détail de l'alimentation électrique des vitrages. Elle est ici effectuée à l'aide d'un générateur de tension, comme représenté sous la référence 10 aux figures 1 et 2. Elle pourrait également être effectuée à l'aide d'un générateur d'intensité. Pour plus de détails sur les divers modes d'alimentation, la configuration des amenées de courant ou les différents systèmes de régulation, on se rapportera avantageusement aux brevets EP-0 408 427, EP-0 475 847, EP-0 568 457, EP-0 584 003 et EP-0 683 419.

L'exemple 1 concerne un vitrage électrochrome dont l'électrolyte contient un polymère, les exemples suivants concernent des vitrages électrochromes « tout solide ».

### EXEMPLE 1

L'exemple 1 correspond au vitrage représenté à la figure 1. Il est constitué d'un premier substrat en verre 1, puis successivement :
→ une première couche électroconductrice 2 en SnO₂:F de 300 nm,
→ une première couche de matériau électrochrome anodique 3 en oxyde de nickel hydraté NiOₓH_{y} de 185 nm, (elle pourrait être remplacée par une couche en oxyde d'iridium hydraté)
→ un électrolyte 4 se décomposant en une première couche 4a en oxyde de tantale hydraté Ta₂O₅.Hₓ de 100 nm, une seconde couche 4b en oxyde de tungstène hydraté WO₃.Hₓ de 200 nm, une troisième couche 4c en solution solide de polyoxyéthylène avec de l'acide phosphorique POE-H₃PO₄ de 100 micromètres,
→ une seconde couche 5 de matériau électrochrome cathodique à base d'oxyde de tungstène de 350 nm,
→ une seconde couche 6 de SnO₂:F de 300 nm puis un second substrat en verre 7.

Sont également représentées les amenées de courant 11, 12 sous forme de bandes placées aux extrémités opposées des deux couches électroconductrices 2, 6 et reliées électriquement à un générateur de tension 10.

On a donc, conformément à l'invention, dans cet exemple un électrolyte tri-couche, qui contient une couche 4b en matériau électrochrome cathodique que l'on a hydraté pour s'assurer de sa conductivité protonique et dont on a bloqué l'état d'insertion en le disposant entre deux couches 4a, 4c toutes deux conductrices protoniques et isolantes sur le plan électronique. Ainsi, le degré d'oxydation de la couche 4b est maintenu constant, puisqu'elle se trouve isolée électriquement des deux couches électroconductrices 2, 6 du système.

Par rapport à un électrolyte qui ne contiendrait que la couche 4c de polymère POE-H₃PO₄, l'électrolyte tri-couche de l'invention permet de préserver l'intégrité des matériaux électrochromes « actifs » du système, et tout particulièrement l'intégrité et la durabilité de la couche de matériau électrochrome anodique 3 appelée contre-électrode.

Pour évaluer cette durabilité améliorée, on a fait le test suivant : on a réalisé une « demi-cellule » selon l'exemple 1 c'est-à-dire qu'on a réalisé l'empilement :
verre (1) / SnO₂:F (2) / NiOₓH_{y} (3) / Ta₂O₅.Hₓ (4a) / WO₃.Hₓ (4b)

En parallèle, à titre de comparaison, on a réalisé l'empilement :
verre (1) / SnO₂:F (2) / NiOₓH_{y} (3)

On a fait cycler ensuite de -1,4 à + O volt ces deux demi-cellules dans une solution aqueuse contenant H₃PO₄ dans une concentration 0,25 M, avec comme référence une électrode au calomel saturé.

Le voltamogramme de la figure 4 correspond au comportement électrique de la demi-cellule selon l'exemple 1 : il montre une fonctionnalité correcte de cette dernière. Le tableau ci-dessous regroupe, en fonction du numéro de cycle (n°), la quantité de charges insérées Qᵢₙₓ et désinsérées Q_{dés} par la demi-cellule, en mC/cm² :

| n° de cycle | Q_{dés} | Qₗₙₛ |
|---|---|---|
| 2 | 9,0 | - 8,9 |
| 10 | 9,7 | - 9,6 |
| 12 | 9,6 | - 9,5 |
| 20 | 9,5 | - 9,4 |

On vérifie bien que, quelque soit le nombre de cycles effectué, on a une quasi-constance dans le nombre de charges insérées ou désinsérées par cycle, ce qui prouve la bonne reproductibilité de la commutation du matériau électrochrome anodique d'un état d'oxydation à un autre. Ce matériau conserve ainsi son intégrité dans un milieu hautement acide, ce qui montre que la « portion » d'électrolyte Ta₂O₅.nH₂O/WO₃.nH₂O le protège de manière efficace.

Par ailleurs, quand on soumet la demi-cellule à un potentiel de -0,4 volt par rapport à l'électrode au calomel saturé, la demi-cellule reste à l'état décoloré. Or c'est une valeur de potentiel pour laquelle un matériau électrochrome tel que l'oxyde de tungstène bleuit fortement. S'il reste transparent, c'est donc que la couche de Ta₂O₅.nH₂O l'isole électroniquement de façon satisfaisante, le bloquant dans un état décoloré.

Par contre, si l'on plonge la demi-cellule faite à titre de comparaison, dans la solution aqueuse d'H₃PO₄ à 0,25 M, demi-cellule dépourvue donc de couches en Ta₂O₅ et WO₃ hydratés, on constate la dissolution quasi-immédiate du matériau électrochrome anodique à base d'oxyde de nickel, et donc une perte totale de fonctionnalité.

### EXEMPLE 2

Cet exemple correspond à un vitrage non représenté. Il est constitué d'un unique substrat en verre sur lequel on a déposé l'une après l'autre toutes les couches du système, soit :
→ une couche électroconductrice en SnO₂:F de 300 nm,
→ une couche de matériau électrochrome cathodique en oxyde de tungstène de 380 nm,
→ un électrolyte bi-couche se décomposant en une couche d'oxyde de tantale hydraté Ta₂O₅.nH₂O de 18 nm et une couche d'oxyde de tungstène hydraté WO₃.nH₂O de 200 nm (Il n'y a pas de troisième couche ici, mais elle peut aussi être prévue et être à base de Ta₂O₅-nH₂O comme la première couche),
→ une couche de matériau électrochrome anodique à base d'oxyde d'iridium hydraté HₓIrO_{y} de 45 nm, (elle peut être remplacée par de l'oxyde de nickel hydraté),
→ une couche électroconductrice en ITO de 200 nm.

On fait fonctionner ce vitrage en imposant un potentiel de -1,4 V pour imposer la coloration et de 0 V pour provoquer la décoloration du système. On a représenté en figure 5 le comportement du vitrage soumis à un tel cycle de coloration/décoloration : la courbe C₁ indique la variation de densité du courant en mA/cm² en fonction du temps exprimé en secondes. La courbe C₂ indique la variation de transmission lumineuse T_{L} en % selon l'illuminant D₆₅ également en fonction du temps exprimé en secondes.

Le vitrage fonctionne de façon tout-à-fait satisfaisante.

### EXEMPLE 3

Cet exemple correspond au vitrage représenté en figure 2. Il est constitué d'un substrat en verre 1, sur lequel sont déposées l'une après l'autre les couches suivantes :
→ une couche électroconductrice 2 en ITO ou en SnO₂:F de 300 nm,
→ une couche 3 en matériau électrochrome cathodique en oxyde de tungstène WO₃,
→ un électrolyte 4 tri-couche composé d'une couche 4a d'oxyde de tantale hydraté, d'une couche 4b d'oxyde de tungstène hydraté d'épaisseur identique aux mêmes couches selon l'exemple précédent, et en plus une couche 4d en oxyde de tantale hydraté similaire à la couche 4a et d'épaisseur 18 nm,
→ une couche 5 en matériau électrochrome anodique en oxyde de nickel NiOₓ d'épaisseur d'environ 200 nm ou en oxyde d'iridium IrOₓ d'épaisseur environ 50 nm, ces oxydes étant éventuellement hydratés,
→ une couche 6 électroconductrice en argent de 10 nm,
→ un ensemble de couches 8 visant à protéger la couche sous-jacente d'argent, notamment vis-à-vis de l'oxydation. Il s'agit de préférence d'une mince couche de NiCr de 1 à 3 nm d'épaisseur surmontée d'une couche de matériau par exemple diélectrique, notamment à base d'oxyde tel que l'oxyde d'étain, d'une épaisseur comprise entre 20 et 50 nm. (La couche de NiCr permet de protéger de l'oxydation la couche d'argent lors du dépôt de la couche en SnO₂ par pulvérisation cathodique en présence d'oxygène. Elle est donc, dans le vitrage final, partiellement ou totalement oxydée). Une seconde couche de NiCr peut aussi être éventuellement intercalée entre la couche d'argent 6 et la couche électrochimiquement active 5.

### EXEMPLE 4

Alors que les exemples précédents fonctionnaient en transmission, en utilisant des couches électroconductrices essentiellement transparentes car soit en oxyde, soit en métal mais alors très minces, cet exemple concerne un vitrage électrochrome à fonction miroir, de même structure qu'à la figure 2. L'empilement de couches est le même qu'à l'exemple 3, à part deux caractéristiques : ici, on a supprimé la couche 4c en oxyde de tantale hydraté (qui est donc en fait optionnelle) et on a augmenté l'épaisseur de la couche 6 électroconductrice en argent jusqu'à une épaisseur supérieure à 30 nm, par exemple d'environ 50 nm (elle peut être remplacée par une couche d'aluminium de même épaisseur).

L'observateur regarde ici le vitrage à travers le substrat 1 et sa modification de couleur, puisque la première couche électroconductrice 2 est transparente, l'effet réfléchissant miroir étant obtenu par la seconde couche électroconductrice 6 métallique.

On a monté les vitrages électrochromes « tout solide » en double-vitrage, comme représenté très schématiquement à la figure 3 : le substrat 1 porteur de l'empilement de couches 2 à 8, non représenté, est assemblé à un second substrat en verre 9 par l'intermédiaire d'une lame de gaz 15, de façon à ce que l'empilement de couches soit tourné du côté de cette lame de gaz. Pour éviter toute fragilisation de l'empilement de couches par exposition à des variations de taux d'humidité, il est bon de prévoir des moyens pour contrôler rigoureusement l'hygrométrie au niveau de la lame de gaz. On a ici prévu un intercalaire métallique rempli de particules à but de régulation hygrométrique 13 sur lequel on pose un joint périphérique 14 en polysulfure et/ou en caoutchouc butyl.

Tout assemblage de vitrage électrochrome selon l'un quelconque des exemples peut être envisagé, notamment en vitrage multiple isolant et/ou en vitrage feuilleté. On pourra se reporter par exemple au brevet EP-0 575 207.

De cette série d'exemples, on peut tirer les conclusions suivantes.

Si l'on souhaite conserver un électrolyte sous forme de polymère dans lequel on a dissout un acide fort comme H₃PO₄, ce qui est le cas de l'exemple 1 , l'invention en « complétant » cet électrolyte par un matériau électrochrome « inhibé » et par une couche d'oxyde hydraté, a trouvé une solution très efficace pour prévenir la dégradation de la contre-électrode en matériau électrochrome anodique.

Si, au contraire, on préfère passer à un système tout solide, ce qui est le cas des autres exemples, le matériau électrochrome « inhibé » peut alors se substituer complètement à l'électrolyte polymère habituel. En l'isolant électroniquement de l'une au moins des sources d'électrons, on cumule aux avantages : l'avantage précédent, c'est-à-dire la préservation de la contre-électrode, et l'avantage d'une fabrication par dépôts successifs sur un même substrat. Monté en double-vitrage comme montré à la figure 3, le vitrage tout solide est particulièrement avantageux : les couches sont protégées, et le gain en termes de poids et d'encombrement par rapport à un double-vitrage ayant recours à un vitrage électrochrome à deux substrats est évident.

Il est aussi important de souligner que l'invention est simple de mise en oeuvre, dans la mesure où la couche 4b spécifique à l'invention est en un matériau en général du type de ceux déjà utilisés pour leurs propriétés électrochromes, tel que l'oxyde de tungstène : même s'il est nécessaire d'ajuster correctement les conditions de dépôt, notamment pour obtenir éventuellement le taux d'hydratation recherché, on en maîtrisait déjà avant l'invention la fabrication. L'invention a surtout en fait conféré, de manière inattendue, une seconde fonction à des matériaux électrochromes souvent déjà connus.

En dernier lieu, que le vitrage électrochrome fonctionne en transmission (exemples 1 à 3) ou en réflexion (exemple 4), on peut avantageusement ajuster les caractéristiques des couches qu'il utilise pour lui conférer un aspect optique donné. Ainsi, on peut moduler les indices de réfraction et/ou les épaisseurs des couches à base de métal ou d'oxyde pour obtenir un vitrage qui va commuter dans une plage de transmission lumineuse donnée, qui va avoir un aspect plus ou moins réfléchissant ou une colorimétrie donnée.

Cet ajustement des caractéristiques optiques du vitrage peut également être effectué à l'aide de couches complémentaires qui peuvent, par exemple, être insérées entre substrats et couches électroconductrices, ou même être « extérieures » au système électrochrome, par exemple en étant déposées sur l'autre face du substrat verrier.

## Revendications

1. Dispositif électrochimique comportant au moins un substrat (1, 7), et comportant successivement une couche (2) électroconductrice, une couche (3) électrochimiquement active susceptible d'insérer de manière réversible des cations, un électrolyte (4) comportant une couche (4b) en matériau conducteur ionique susceptible d'insérer de manière réversible les cations mais dont le degré d'oxydation global est maintenu essentiellement constant, et au moins une couche (4a, 4d) isolante électroniquement, une seconde couche (5) électrochimiquement active susceptible d'insérer de manière réversible des cations et une couche (6) électroconductrice
**caractérise en ce que** le degré d'oxydation global de la couche (4b) de l'électrolyte (4) est maintenu essentiellement constant en isolant électriquement ladite couche (4b) vis-à-vis d'au moins une des sources d'électrons du dispositif en interposant au moins une couche (4a, 4d) d'un matériau isolant électroniquement, les couche(s) (4a, 4d) en matériau isolant électroniquement étant aussi conducteur(s) ionique(s)/perméable(s) aux ions, le matériau de la couche (4b) susceptible d'insérer de manière réversible les ions mais dont le degré d'oxydation est maintenu essentiellement constant étant un matériau à propriété électrochrome maintenu à l'état décoloré ou un état de coloration intermédiaire.

2. Dispositif électrochimique selon la revendication 1, **caractérisé en ce que** la (les) couche(s) (4a, 4d) en matériau isolant électroniquement est en contact direct avec au moins une des faces de la couche (4b) à degré d'oxydation global maintenu essentiellement constant.

3. Dispositif électrochimique selon l'une des revendications précédentes, **caractérisé en ce que** le degré d'oxydation global de la couche (4b) de l'électrolyte (4) est maintenu essentiellement constant en maintenant le potentiel de ladite couche (4b) à des valeurs hors de la plage de potentiels provoquant une variation du taux d'insertion ionique du matériau qui la constitue.

4. Dispositif électrochimique selon l'une des revendications précédentes, **caractérisé en ce qu'**il fonctionne par insertion réversible de protons de la ou des couches (3, 5) électrochimiquement active(s) et **en ce que** le matériau de la couche (4b) de l'électrolyte (4) susceptible d'insérer réversiblement les protons mais dont le degré d'oxydation est maintenu essentiellement constant est à base d'un oxyde ou d'un mélange d'oxydes métallique(s) éventuellement hydraté(s), notamment choisi(s) dans le groupe comprenant l'oxyde de tungstène éventuellement hydraté WO₃.nH₂O, l'oxyde de niobium éventuellement hydraté Nb₂O₅.nH₂O, l'oxyde de nickel éventuellement hydraté NiOₓH_{y}-nH₂O, l'oxyde d'étain éventuellement hydraté SnO₂.nH₂O, l'oxyde de bismuth éventuellement hydraté Bi₂O₃.nH₂O, l'oxyde de titane éventuellement hydraté TiO₂-nH₂O, l'oxyde de vanadium éventuellement hydraté V₂O₅-nH₂O, l'oxyde de molybdène éventuellement hydraté MoO₃-nH₂O, avec n ≥ 0 et comprenant éventuellement un métal additif favorisant l'hydratation, sous forme d'un métal additionnel tel que le titane, le tantale ou le rhénium, ou d'un alcalin du type Na, Li ou K.

5. Dispositif électrochimique selon l'une des revendications 1 à 3, **caractérisé en ce qu'**il fonctionne par insertion réversible d'ions lithium Li⁺ de la ou des couches (3, 5) électrochimiquement active(s) et **en ce que** le matériau de la couche (4b) de l'électrolyte (4) susceptible d'insérer réversiblement les ions lithium Li ⁺mais dont le degré d'oxydation est maintenu essentiellement constant est à base d'un oxyde ou d'un mélange d'oxydes métallique(s) lithié(s) ou non, notamment choisi(s) dans le groupe comprenant l'oxyde de nickel NiOₓ, l'oxyde de nickel lithié Liy NiOₓ, un mélange d'oxydes de titane et de cérium Ce-TiOₓ, l'oxyde de tungstène WO₃, l'oxyde de niobium Nb₂O₅, l'oxyde de vanadium V₂O₅, l'oxyde de vanadium lithié LiₓV₂O₅.

6. Dispositif électrochimique selon l'une des revendications précédentes, **caractérisé en ce que** la ou les couche(s) (4a, 4d) de matériau isolant électroniquement comporte(nt) au moins un oxyde d'un métal de la colonne Vb du tableau périodique, notamment de l'oxyde de tantale Ta₂O₅, mais aussi au moins un oxyde métallique appartenant au groupe comprenant l'oxyde d'antimoine Sb₂O₅, l'oxyde de zirconium ZrO₂, l'oxyde de titane TiO₂, l'oxyde de silicium SiO₂, l'oxyde de chrome CrO₃, notamment un oxyde mixte tantale-titane, oxyde de germanium GeO₃, ZnO(H₃PO₄)₂.nH₂O, tous ces oxydes étant éventuellement hydratés et comprenant éventuellement un additif favorisant leur hydratation, comme un métal du type W, Re ou un alcalin du type Li, Na, K.

7. Dispositif électrochimique selon l'une des revendications précédentes, **caractérisé en ce que** la (les) couche(s) (4a, 4d) de matériau isolant électroniquement sont à base de CeF₃, hexa- uranylphosphate HUP, MgF₂, CaF₂, SiOₓ, LiF, Na₃AlF₆, ou à base de Li₃N, LiTaO₃, LiAlF₄, Li₃PO₄, LiPO₂, LiN, LiNbO₃, MgF₂POLi, Li₂WO₄ plus particulièrement dans le cas où le dispositif fonctionne par insertion réversible d'ions lithium de la ou des couche(s) (3, 5) électrochimiquement active(s).

8. Dispositif électrochimique selon l'une des revendications précédentes, **caractérisé en ce que** les matériaux constituant la couche (4b) susceptible d'insérer de manière réversible les ions mais dont le degré d'oxydation est maintenu essentiellement constant et/ou les matériaux constituant la (les) couche(s) (4a, 4d) en matériau isolant électroniquement sont nitrurés et/ou phosphatés.

9. Dispositif électrochimique selon l'une des revendications précédentes, **caractérisé en ce que** la (les) couche(s) (3, 5) électrochimiquement active(s) comprennent une couche (5) de matériau électrochrome cathodique tel que de l'oxyde de tungstène WO₃, l'oxyde de molybdène MoO₃, l'oxyde de vanadium V₂ O₅, l'oxyde de niobium Nb₂O₅, l'oxyde de titane TiO₂, un matériau cermet du type WO₃/Au ou WO₃/Ag, un mélange d'oxydes de tungstène et de rhénium WO₃/ReO₃, l'acide phosphotungstique, les métallophtalocyanines ou métallodibenzophtalocyanines de métaux de transition ou de terres rares, éventuellement nitrurés, notamment dans le cas où le dispositif fonctionne par insertion réversible d'ions lithium Li⁺ ou de protons, et les mêmes matériaux éventuellement hydratés dans le cas où le dispositif fonctionne notamment par insertion réversible de protons H⁺.

10. Dispositif électrochimique selon l'une des revendications précédentes, **caractérisé en ce que** la (les) couche(s) électrochimiquement active(s) comprennent une couche (3) de matériau électrochrome anodique sous la forme MₓA_{y}U_{z}, avec M un métal de transition, A l'on utilisé pour l'insertion réversible, soit un alcalin ou un proton, et U un chalcogène tel que S, O ou Se, éventuellement nitruré.

11. Dispositif électrochimique selon l'une des revendications précédentes, **caractérisé en ce que** la (les) couche(s) électrochimiquement active(s) comprennent une couche (3) de matériau électrochrome anodique, qui est choisi, dans le cas d'une insertion réversible de protons, dans le groupe comprenant LiNiOₓ, IrOₓH_{y}, IrOₓH_{y}N_{z}, NiOₓ, NiOₓH_{z}, NiOₓH_{y}N_{z}, RhOₓ, CoOₓ, CrOₓ, MnOₓ, hydrure de terre rare, de lanthanide ou de métaux de transition et dans le cas d'une insertion réversible d'ions lithium Li⁺, dans le groupe comprenant LiNiOₓ, LiMn₂O₄, IrOₓ, LiₓIrO_{y}, NiOₓ, CeOₓ, TiOₓ, CeOₓ-TiOₓ, RhOₓ, CoOₓ, CrOₓ, MnOₓ, VOₓ, Liₓ, CoO_{y}, LiCrO_{y}, LiₓVO_{y}, ReOₓ, RhOₓ, PtOₓ, FeOₓ, OsO_{y}, CuOₓ, PrOₓ, ces composés étant éventuellement lithiés et/ou nitrurés, et dans le cas d'insertion de protons ou de Li⁺ ou des hexacyanométalates, notamment de formule M[M'(CN) 6], avec M et M' étant des métaux de transition et/ou des terres rares.

12. Dispositif électrochimique selon l'une des revendications précédentes, **caractérisé en ce qu'**au moins une des couches électroconductrice(s) (2, 6) est à base d'au moins un oxyde métallique dopé tel que ITO ou SnO₂:F ou à base de métal ou d'alliages métalliques tel que l'or, l'argent, l'aluminium ou alliage Ni-Cr ou de la superposition de plusieurs couches de ces matériaux.

13. Vitrage électrochrome, **caractérisé en ce qu'**il comporte le dispositif électrochimique selon l'une des revendications précédentes.

14. Vitrage électrochrome selon la revendication 13, **caractérisé en ce qu'**il est à transmission lumineuse variable, avec le substrat ou l'ensemble des substrats (1, 7) essentiellement transparent(s), en verre ou en plastique.

15. Vitrage électrochrome selon la revendication 13, **caractérisé en ce qu'**il est à fonction miroir, soit par association du dispositif électrochimique avec un élément réfléchissant, soit par le choix d'un substrat opaque réfléchissant, soit par le choix d'une des couches électroconductrices (2, 6) en métal suffisamment épaisse pour être réfléchissante.

16. Vitrage électrochrome selon l'une des revendications 13 ou 14, **caractérisé en ce qu'**il comprend le dispositif électrochimique comprenant un ou deux substrats (1, 7) transparent(s) ou peu absorbants montés en double vitrage ou en fenêtre pariétodynamique à l'aide d'un autre substrat transparent (9).

## Patentansprüche

1. Elektrochemische Vorrichtung, umfassend wenigstens ein Substrat (1, 7) sowie nacheinander eine elektrisch leitende Schicht (2), eine elektrochemisch aktive Schicht (3), die geeignet ist, Kationen reversibel einzubauen, einen Elektrolyt (4), welcher eine Schicht (4b) aus ionenleitendem Material, die geeignet ist, die Kationen reversibel einzubauen, deren Gesamtoxidationsgrad aber im Wesentlichen konstant gehalten wird, und wenigstens eine elektronisch isolierende Schicht (4a, 4d) umfasst, eine zweite elektrochemisch aktive Schicht (5), die geeignet ist, Kationen reversibel einzubauen, sowie eine elektrisch leitende Schicht (6), **dadurch gekennzeichnet, dass** der Gesamtoxidationsgrad der Schicht (4b) des Elektrolyten (4) dadurch im Wesentlichen konstant gehalten wird, dass die Schicht (4b) gegenüber wenigstens einer der Elektronenquellen der Vorrichtung durch Zwischenlegen wenigstens einer Schicht (4a, 4d) aus einem elektronisch isolierenden Material elektrisch isoliert wird, wobei die Schicht(en) (4a, 4d) aus elektronisch isolierendem Material auch ionenleitend/ionendurchlässig ist (sind), wobei das Material der Schicht (4b), die geeignet ist, die Ionen reversibel einzubauen, deren Oxidationsgrad aber im Wesentlichen konstant gehalten wird, ein Material mit elektrochromer Eigenschaft ist, das in entfärbtem Zustand oder einem Zwischenfärbungszustand gehalten wird.

2. Elektrochemische Vorrichtung nach Anspruch 1, **dadurch gekennzeichnet, dass** die Schicht(en) (4a, 4d) aus elektronisch isolierendem Material mit wenigstens einer der Seiten der Schicht (4b) mit im Wesentlichen konstant gehaltenem Gesamtoxidationsgrad in direktem Kontakt ist.

3. Elektrochemische Vorrichtung nach einem der vorstehenden Ansprüche, **dadurch gekennzeichnet, dass** der Gesamtoxidationsgrad der Schicht (4b) des Elektrolyten (4) dadurch im Wesentlichen konstant gehalten wird, dass das Potential der Schicht (4b) auf Werten außerhalb des Bereichs von Potentialen gehalten wird, die eine Änderung der Ioneneinbaurate des Materials, aus dem sie besteht, bewirken.

4. Elektrochemische Vorrichtung nach einem der vorstehenden Ansprüche, **dadurch gekennzeichnet, dass** sie durch reversiblen Einbau von Protonen der elektrochemisch aktiven Schicht oder Schichten (3, 5) funktioniert und dass das Material der Schicht (4b) des Elektrolyten (4), die geeignet ist, die Protonen reversibel einzubauen, deren Oxidationsgrad aber im Wesentlichen konstant gehalten wird, auf der Basis eines Metalloxids oder einer Mischung aus Metalloxiden, eventuell hydratisiert, ist, insbesondere ausgewählt aus der Gruppe umfassend eventuell hydratisiertes Wolframoxid WO₃.nH₂O, eventuell hydratisiertes Nioboxid Nb₂O₅.nH₂O, eventuell hydratisiertes Nickeloxid NiOₓH_{y}-nH₂O, eventuell hydratisiertes Zinnoxid SnO₂.nH₂O, eventuell hydratisiertes Bismutoxid Bi₂O₃.nH₂O,
eventuell hydratisiertes Titanoxid TiO₂-nH₂O, eventuell hydratisiertes Vanadiumoxid V₂O₅-nH₂O, eventuell hydratisiertes Molybdänoxid MoO₃-nH₂O, mit n ≥ 0 und eventuell umfassend ein die Hydratation begünstigendes Zusatzmetall, in Form eines zusätzlichen Metalls, wie Titan, Tantal oder Rhenium, oder eines Alkalis vom Typ Na, Li oder K.

5. Elektrochemische Vorrichtung nach einem der Ansprüche 1 bis 3, **dadurch gekennzeichnet, dass** sie durch reversiblen Einbau von Lithium-Ionen Li⁺ der elektrochemisch aktiven Schicht oder Schichten (3, 5) funktioniert und dass das Material der Schicht (4b) des Elektrolyten (4), die geeignet ist, die Lithium-Ionen Li⁺ reversibel einzubauen, deren Oxidationsgrad aber im Wesentlichen konstant gehalten wird, auf der Basis eines Metalloxids oder einer Mischung aus Metalloxiden, lithiiert oder nicht, ist, insbesondere ausgewählt aus der Gruppe umfassend Nickeloxid NiOₓ, lithiiertes Nickeloxid Li_{y}NiOₓ, eine Mischung aus Titan- und Ceroxiden Ce-TiOₓ, Wolframoxid WO₃, Nioboxid Nb₂O₅, Vanadiumoxid V₂O₅, lithiiertes Vanadiumoxid LiₓV₂O₅.

6. Elektrochemische Vorrichtung nach einem der vorstehenden Ansprüche, **dadurch gekennzeichnet, dass** die Schicht oder Schichten (4a, 4d) aus elektronisch isolierendem Material wenigstens ein Oxid eines Metalls aus der Spalte Vb des Periodensystems umfasst (umfassen), insbesondere Tantaloxid Ta₂O₅, aber auch wenigstens ein Metalloxid, das zu der Gruppe umfassend Antimonoxid Sb₂O₅, Zirkoniumoxid ZrO₂, Titanoxid TiO₂, Siliziumoxid SiO₂, Chromoxid CrO₃, insbesondere ein Tantal-Titan-Mischoxid, Germaniumoxid GeO₃, ZnO(H₃PO₄)₂.nH₂O gehört, wobei all diese Oxide eventuell hydratisiert sind und eventuell ein ihre Hydratation begünstigendes Additiv, wie ein Metall vom Typ W, Re oder ein Alkali vom Typ Li, Na, K umfassen.

7. Elektrochemische Vorrichtung nach einem der vorstehenden Ansprüche, **dadurch gekennzeichnet, dass** die Schicht (Schichten) (4a, 4d) aus elektronisch isolierendem Material auf der Basis von CeF₃, Hexauranylphosphat HUP, MgF₂, CaF₂, SiOₓ, LiF, Na₃AlF₆, oder auf der Basis von Li₃N, LiTaO₃, LiAlF₄, Li₃PO₄, LiPO₂, LiN, LiNbO₃, MgF₂POLi, Li₂WO₄ sind, insbesondere in dem Fall, in dem die Vorrichtung durch reversiblen Einbau von Lithium-Ionen der elektrochemisch aktiven Schicht oder Schichten (3, 5) funktioniert.

8. Elektrochemische Vorrichtung nach einem der vorstehenden Ansprüche, **dadurch gekennzeichnet, dass** die Materialien, welche die Schicht (4b) bilden, die geeignet ist, die Ionen reversibel einzubauen, deren Oxidationsgrad aber im Wesentlichen konstant gehalten wird, und/oder die Materialien, welche die Schicht(en) (4a, 4d) aus elektronisch isolierendem Material bilden, nitriert und/oder phosphatiert sind.

9. Elektrochemische Vorrichtung nach einem der vorstehenden Ansprüche, **dadurch gekennzeichnet, dass** die elektrochemisch aktive(n) Schicht(en) (3, 5) eine Schicht (5) aus elektrochromem Kathodenmaterial, wie Wolframoxid WO₃,
Molybdänoxid MoO₃, Vanadiumoxid V₂O₅, Nioboxid Nb₂O₅, Titanoxid TiO₂, ein Cermet-Material vom Typ WO₃/Au oder WO₃/Ag, ein Wolfram- und Rheniumoxidgemisch WO₃/ReO₃, Phosphorwolframsäure, Metallo-Phthalocyaninen oder
Metallo-Dibenzo-Phthalocyaninen von Übergangsmetallen oder Seltenen Erden, eventuell nitriert, insbesondere in dem Fall, in dem die Vorrichtung durch reversiblen Einbau von Lithium-Ionen Li⁺ oder von Protonen funktioniert, sowie die gleichen Materialien eventuell hydratisiert in dem Fall, in dem die Vorrichtung insbesondere durch reversiblen Einbau von Protonen H⁺ funktioniert, umfassen.

10. Elektrochemische Vorrichtung nach einem der vorstehenden Ansprüche, **dadurch gekennzeichnet, dass** die elektrochemisch aktive(n) Schicht(en) eine Schicht (3) aus elektrochromem Anodenmaterial in Form von MₓA_{y}U_{z} umfassen,
mit M einem Übergangsmetall, A dem für den reversiblen Einbau verwendeten Ion, entweder ein Alkali oder ein Proton, und U einem Chalkogen, wie S, O oder Se, eventuell nitriert.

11. Elektrochemische Vorrichtung nach einem der vorstehenden Ansprüche, **dadurch gekennzeichnet, dass** die elektrochemisch aktive(n) Schicht(en) eine Schicht (3) aus elektrochromem Anodenmaterial umfassen, das im Fall eines reversiblen Einbaus von Protonen aus der Gruppe umfassend LiNiOₓ, IrOₓHy, IrOₓH_{y}N_{z}, NiOₓ, NiOₓH_{z}, NiOₓHyN_{z}, RhOₓ, CoOₓ, CrOₓ, MnOₓ, Hydrid von Seltene Erde,
von Lanthanid oder von Übergangsmetallen ausgewählt ist und im Fall eines reversiblen Einbaus von Lithium-Ionen Li⁺ aus der Gruppe umfassend LiNiOₓ, LiMn₂O₄, IrOₓ, LiₓIrO_{y}, NiOₓ, CeOₓ, TiOₓ, CeOₓ-TiOₓ, RhOₓ, CoOₓ, CrOₓ, MnOₓ, VOₓ, Liₓ, CoO_{y}, LiCrO_{y}, LiₓVO_{y}, ReOₓ, RhOₓ, PtOₓ, FeOₓ, OsO_{y}, CuOₓ,
PrOₓ ausgewählt ist, wobei diese Verbindungen eventuell lithiiert und/oder nitriert sind, sowie, im Fall eines Einbaus von Protonen oder von Li⁺, aus Hexacyanometalaten, insbesondere der Formel M[M'(CN)₆], wobei M und M' Übergangsmetalle und/oder Seltene Erden sind.

12. Elektrochemische Vorrichtung nach einem der vorstehenden Ansprüche, **dadurch gekennzeichnet, dass** wenigstens eine der elektrisch leitenden Schichten (2, 6) auf der Basis wenigstens eines dotierten Metalloxids, wie ITO oder SnO₂:F oder auf der Basis eines Metalls oder von Metalllegierungen, wie Gold, Silber, Aluminium oder Ni-Cr-Legierung, oder der Übereinanderanordnung mehrerer Schichten aus diesen Materialien ist.

13. Elektrochrome Verglasung, **dadurch gekennzeichnet, dass** sie die elektrochemische Vorrichtung nach einem der vorstehenden Ansprüche umfasst.

14. Elektrochrome Verglasung nach Anspruch 13, **dadurch gekennzeichnet, dass** sie, mit dem oder allen im Wesentlichen transparenten Substrat(en) (1, 7) aus Glas oder aus Kunststoff, eine veränderliche Lichtdurchlässigkeit aufweist.

15. Elektrochrome Verglasung nach Anspruch 13, **dadurch gekennzeichnet, dass** sie eine Spiegelfunktion aufweist, entweder durch Zuordnung der elektrochemischen Vorrichtung zu einem reflektierenden Element oder durch die Wahl eines opaken reflektierenden Substrats oder dadurch, eine der elektrisch leitenden Schichten (2, 6) aus Metall dick genug zu wählen, um reflektierend zu sein.

16. Elektrochrome Verglasung nach einem der Ansprüche 13 oder 14, **dadurch gekennzeichnet, dass** sie die elektrochemische Vorrichtung umfasst, die ein oder zwei transparente(s) oder kaum absorbierende Substrat(e) (1, 7) umfasst, die mit Hilfe eines weiteren transparenten Substrats (9) als Doppelverglasung oder als parietal-dynamisches Fenster angeordnet sind.

## Claims

1. Electrochemical device which includes at least one substrate (1, 7), and which includes, in succession, an electronically conductive layer (2), an electrochemically active layer (3) capable of reversibly injecting cations, an electrolyte (4) which includes a layer (4b) made of ionically conductive material capable of reversibly injecting the cations but whose overall degree of oxidation is maintained essentially constant, and at least one electronically insulating layer (4a, 4c), a second electrochemically active layer (5) capable of reversibly injecting cations, and an electronically conductive layer (6),
**characterized in that** in which the overall degree of oxidation of the layer (4b) of the electrolyte (4) is maintained essentially constant by electrically isolating the said layer (4b) from at least one of the electron sources of the device by interposing at least one layer (4a, 4d) of an electronically insulating material, the layer(s) (4a, 4d) made of electronically insulating material also being ionically conductive/ion-permeable, the material of the layer (4b) capable of reversibly injecting the ions but whose degree of oxidation is maintained essentially constant being a material exhibiting an electrochromic property maintained in the decoloured state or in an intermediate state of coloration.

2. Electrochemical device according to Claim 1, **characterized in that** the layer(s) (4a, 4d) made of electronically insulating material is in direct contact with at least one of the faces of the layer (4b) having an overall degree of oxidation maintained essentially constant.

3. Electrochemical device according to one of the preceding claims, **characterized in that** the overall degree of oxidation of the layer (4b) of the electrolyte (4) is maintained essentially constant by keeping the potential of the said layer (4b) at values outside the range of potentials causing a variation in the degree of ion injection of the material of which it is composed.

4. Electrochemical device according to one of the preceding claims, **characterized in that** it operates by reversible injection of protons from the electrochemically active layer or layers (3, 5) and **in that** the material of the layer (4b) of the electrolyte (4) capable of reversibly injecting protons but whose degree of oxidation is maintained essentially constant is based on a metal oxide or a mixture of metal oxides, optionally this or these being hydrated and especially chosen from the group comprising tungsten oxide, optionally hydrated, WO₃·ₙH₂O, niobium oxide, optionally hydrated, Nb₂O₅·nH₂O, nickel oxide, optionally hydrated, NiOₓH_{y}·nH₂O, tin oxide, optionally hydrated, SnO₂·nH₂O, bismuth oxide, optionally hydrated, Bi₂O₃·nH₂O, titanium oxide, optionally hydrated, TiO₂·nH₂O, vanadium oxide, optionally hydrated, V₂O₅·nH₂O, molybdenum oxide, optionally hydrated, MoO₃·nH₂O₄ where n ≥ 0 and optionally comprising an additive metal favouring hydration, in the form of an additional metal such as titanium, tantalum or rhenium, or of an alkali metal of the Na, Li or K type.

5. Electrochemical device according to one of Claims 1 to 3, **characterized in that** it operates by reversible injection of lithium ions Li⁺ from the electrochemically active layer or layers (3, 5) and **in that** the material of the layer (4b) of the electrolyte (4) capable of reversibly injecting lithium ions Li⁺ but whose degree of oxidation is maintained essentially constant is based on a metal oxide or a mixture of metal oxides which may or may not be lithiated, it (they) being especially chosen from the group comprising nickel oxide NiOₓ, lithiated nickel oxide Li_{y}NiOₓ, a mixture of titanium and cerium oxides CeTiOₓ, tungsten oxide WO₃, niobium oxide Nb₂O₅, vanadium oxide V₂O₅ and lithiated vanadium oxide LiₓV₂O₅.

6. Electrochemical device according to one of the preceding claims, **characterized in that** the layer or layers (4a, 4d) of electronically insulating material includes (include) at least one oxide of a metal from column VB of the Periodic Table, especially tantalum oxide Ta₂O₅, but also at least one metal oxide belonging to the group comprising antimony oxide Sb₂O₅, zirconium oxide ZrO₂, titanium oxide TiO₂, silicon oxide SiO₂, chromium oxide CrO₃, especially a mixed tantalum-titanium oxide, germanium oxide GeO₃, ZnO(H₃PO₄)₂·nH₂O, all these oxides being optionally hydrated and optionally comprising an additive favouring their hydration, such as a metal of the W, Re type or an alkali metal of the Li, Na, K type.

7. Electrochemical device according to one of the preceding claims, **characterized in that** the layer(s) (4a, 4c) of electronically insulating material are based on CeF₃, hexauranylphosphate HUP, MgF₂, CaF₂, SiOₓ, LiF, Na₃AlF₆, or based on Li₃N, LiTaO₃, LiAlF₄, Li₃PO₄, LiPO₂, LiN, LiNbO₃, MgF₂POLi or Li₂WO₄ more particularly in the case in which the device operates by reversible injection of lithium ions from the electrochemically active layer or layers (3, 5).

8. Electrochemical device according to one of the preceding claims, **characterized in that** the materials forming the layer (4b) capable of reversibly injecting the ions but whose degree of oxidation is maintained essentially constant and/or the materials forming the layer(s) (4a, 4d) made of electronically insulating material are nitrided and/or phosphatized.

9. Electrochemical device according to one of the preceding claims, **characterized in that** the electrochemically active layer(s) (3, 5) comprise a layer (5) of cathodic electrochromic material such as tungsten oxide WO₃, molybdenum oxide MoO₃, vanadium oxide V₂O₅, niobium oxide Nb₂O₅, titanium oxide TiO₂, a cermet material of the WO₃/Au or WO₃/Ag type, a mixture of tungsten and rhenium oxides WO₃/ReO₃, phosphotungstic, metallophthalocyanines or metallodibenzophthalocyanines of transition metals or of rare earths, optionally nitrided, especially in the case in which the device operates by reversible injection of lithium ions Li⁺ or protons, and the same materials optionally hydrated in the case in which the device operates especially by reversible injection of protons H⁺.

10. Electrochemical device according to one of the preceding claims, **characterized in that** the electrochemically active layer(s) comprise a layer (3) of anodic electrochromic material in the form MₓA_{y}U_{z}, where M is a transition metal, A is the ion used for the reversible injection, i.e. an alkali metal or a proton, and U is a chalcogenide such as S, O or Se, optionally nitrided.

11. Electrochemical device according to one of the preceding claims, **characterized in that** the electrochemically active layer(s) comprise a layer (3) of anodic electrochromic material which is chosen, in the case of reversible injection of protons, from the group comprising LiNiOₓ, IrOₓH_{y}, IrOₓH_{y}N_{z}, NiOₓ, NiOₓH₂, NiOₓH_{y}N_{z}, RhOₓ, CoOₓ, CrOₓ, MnOₓ, and a hydride of a rare earth, of a lanthanide or of transition metals and, in the case of reversible injection of lithium ions Li⁺, from the group comprising LiNiOₓ, LiMn₂O₄, IrOₓ, LiₓIrO_{y}, NiOₓ, CeOₓ, TiOₓ, CeOₓ-TiOₓ, RhOₓ, CoOₓ, CrOₓ, MnOₓ, VOₓ, Liₓ, CoO_{y}, LiCrO_{y}, LiₓVO_{y}, ReOₓ, RhOₓ, PtOₓ, FeOₓ, OsO_{y}, CuOₓ, PrOₓ, these compounds being optionally lithiated and/or nitrided, and, in the case of injection of protons or of Li⁺ or of hexacyanometalates, especially of formula M[M'(CN)₆], with M and M' being transition metals and/or rare earths.

12. Electrochemical device according to one of the preceding claims, **characterized in that** at least one of the electronically conductive layer(s) (2, 6) is based on at least one doped metal oxide, such as ITO or F:SnO₂, or based on a metal or on metal alloys such as gold, silver, aluminium or Ni-Cr alloy or on the superposition of several layers of these materials.

13. Electrochromic glazing, **characterized in that** it includes the electrochemical device according to one of the preceding claims.

14. Electrochromic glazing according to Claim 13, **characterized in that** it has a variable light transmission coefficient, with the essentially transparent substrate or both substrates (1, 7) made of glass or of plastic.

15. Electrochromic glazing according to Claim 13, **characterized in that** it has a mirror function, either by combining the electrochemical device with a reflecting element, or by choosing a reflecting opaque substrate, or by choosing one of the electronically conductive metal layers (2, 6) sufficiently thick to be reflecting.

16. Electrochromic glazing according to either of Claims 13 and 14, **characterized in that** it comprises the electrochemical device comprising one or two transparent or barely absorbent substrates (1, 7) mounted as double glazing or as a parietodynamic window using another transparent substrate (9).
